# FASCICULE DE BREVET EUROPEEN

(11) **EP 3 548 364 B1**
(45) Date de publication et mention de la délivrance du brevet: **06.01.2021**
(21) Numéro de dépôt: 17800862.9
(22) Date de dépôt: 20.11.2017
(51) Int. Cl.: B62D 35/02

(54) **DIFFUSEUR AÉRODYNAMIQUE POUR SOUBASSEMENT D'UN VÉHICULE AUTOMOBILE**
AERODYNAMISCHER DIFFUSOR FÜR DEN UNTERBAU EINES KRAFTFAHRZEUGS
AERODYNAMIC DIFFUSER FOR UNDERBODY OF A MOTOR VEHICLE

(30) Priorité: 02.12.2016 FR 1661860
(43) Date de publication de la demande: 09.10.2019
(73) Titulaire: RENAULT s.a.s., 92100 Boulogne-Billancourt (FR)
(72) Inventeur: GROSDIDIER, Marc, 91650 St Yon (FR)
(86) Numéro de dépôt international: PCT/EP2017/079787
(87) Numéro de publication internationale: WO 2018/099753

(56) Documents cités:
- EP-A1- 2 439 131
- EP-A1- 2 557 024
- AT-B- 406 140
- CA-A1- 2 642 163
- US-A1- 2016 272 257

## Description

### Domaine de l'invention :

La présente invention concerne un diffuseur aérodynamique pour soubassement d'un véhicule automobile. L'invention se rapporte plus particulièrement à un diffuseur pourvu de dérives longitudinales aptes à guider et canaliser l'écoulement d'air sous le véhicule pour améliorer la stabilité du véhicule.

### Etat de la technique :

Sur un véhicule typé sport, nous utilisons classiquement le soubassement de la voiture pour diminuer la portance du véhicule et par conséquent augmenter l'appui au sol s'exerçant sur le véhicule. Un diffuseur aérodynamique est un dispositif prévu à cet effet qui est situé sous le soubassement du véhicule, dans sa partie arrière. Le diffuseur joue un rôle important en améliorant grandement la stabilité et l'adhérence à haute vitesse du véhicule. Un tel diffuseur comporte classiquement des dérives qui ont la forme générale de nervures en saillie vers le sol, orientées longitudinalement, qui délimitent des tunnels canalisant le flux d'air sous le véhicule en situation de roulage. Des dérives peuvent avoir des longueurs variables, selon le type de véhicule. Dans le cas de longues dérives qui s'étendent longitudinalement entre l'arrière et une région centrale du véhicule (à mi-distance de sa longueur), des dérives peuvent entrer en conflit avec un sol accidenté ou présentant des reliefs ce qui peut être source de casse ou d'endommagement. Les documents CA 2 642 163 A1 et AT 406 140 B décrivant des diffuseurs aérodynamiques longitudinaux ayant une partie souple, mais ne répondant pas totalement au risque de casse ou d'endommagement.

### But de l'invention :

L'invention a pour but de pallier tout ou partie des inconvénients précédents en proposant un diffuseur qui peut couvrir une surface maximale sous le véhicule, tant en largeur qu'en longueur mesurée suivant la direction longitudinale du véhicule, afin d'offrir une efficacité et une stabilité maximales pour le véhicule, tout en état adapté à un sol susceptible de présenter des reliefs ou une forme bombée.

### Objet de l'invention :

A cet effet, l'invention a pour objet un diffuseur aérodynamique pour soubassement d'un véhicule automobile, comprenant une série de dérives s'étendant essentiellement suivant la direction longitudinale du véhicule, au moins une partie des dérives étant souple. Selon l'invention, le diffuseur aérodynamique comprend une première série de dérives souples situées dans une zone intermédiaire du soubassement du véhicule, et une seconde série de dérives rigides situées dans une zone arrière située à l'arrière de la zone intermédiaire, et débouchant sur un bord arrière du soubassement du véhicule.

Ce diffuseur très étendu et ayant des dérives de grandes dimensions présente une efficacité optimale, tout en étant compatible avec une garde au sol réduite du véhicule, en raison de la souplesse d'une partie au moins des dérives.

Selon d'autres caractéristiques avantageuses de l'invention :
- les dérives de la première série sont prolongées longitudinalement par les dérives de la seconde série, les dérives de l'une des première ou seconde série comportent une conformation adaptée pour coopérer par contact et continuité de matière avec une conformation complémentaire de l'autre des première ou seconde série ;
- chacune des première et seconde séries de dérives comporte entre six et dix, notamment huit dérives, disposées symétriquement de part et d'autre d'un plan vertical longitudinal médian du véhicule, les dérives présentant une forme rectiligne et/ou arquée présentant un côté convexe dirigé vers un plan vertical longitudinal médian du véhicule ;
- les dérives de la première série et/ou de la seconde série ont une section transversale ayant la forme générale d'un L dont l'une des branches est fixée au soubassement ;
- les dérives de la première série et/ou de la seconde série sont fixées au soubassement par rivet avec une distance entre deux rivets consécutifs comprise entre 150 et 250 mm, par exemple 200 mm ;
- les dérives de la première série sont en élastomère thermoplastique ;
- les dérives de la première série ont une hauteur comprise entre 20 et 40 mm, notamment 30 mm.

L'invention a également pour objet un soubassement de véhicule automobile comprenant un diffuseur aérodynamique ayant tout ou partie des caractéristiques précédentes.

L'invention a encore pour objet un véhicule automobile comprenant un soubassement pourvu d'un diffuseur aérodynamique ayant tout ou partie des caractéristiques précédentes.

### Exposé de l'invention :

L'invention sera mieux comprise à la lecture de la description suivante d'un exemple non limitatif de l'invention, et à la lumière des dessins annexés sur lesquels :
- la figure 1 représente une vue en perspective de la partie arrière du soubassement du véhicule, vu de dessous, comprenant un diffuseur aérodynamique suivant l'invention ;
- la figure 2 représente une vue du soubassement de la figure 1, suivant un angle de vue strictement vertical ;
- la figure 3 représente une vue en perspective d'un détail de réalisation du diffuseur de la figure 1, localisé à la jonction des dérives rigides et souples.

Pour les besoins de la description, les directions et orientations sont indiquées en référence au repère XYZ classiquement utilisé en conception automobile, dans lequel X est la direction longitudinale avant-arrière du véhicule, dirigé vers l'arrière, Y est la direction transversale au véhicule, dirigé vers la droite et Z la direction verticale dirigée vers le haut.

Les notions avant-arrière s'entendent par rapport au sens de marche normal du véhicule qui est dirigé vers l'avant.

Le terme « sensiblement » indique qu'un léger écart est admis par rapport à une position ou disposition nominale déterminée, tout en restant inclus dans le cadre de l'invention. Par exemple « sensiblement vertical » indique qu'un écart de l'ordre de 10° par rapport à une orientation strictement verticale est admis dans le cadre de l'invention.

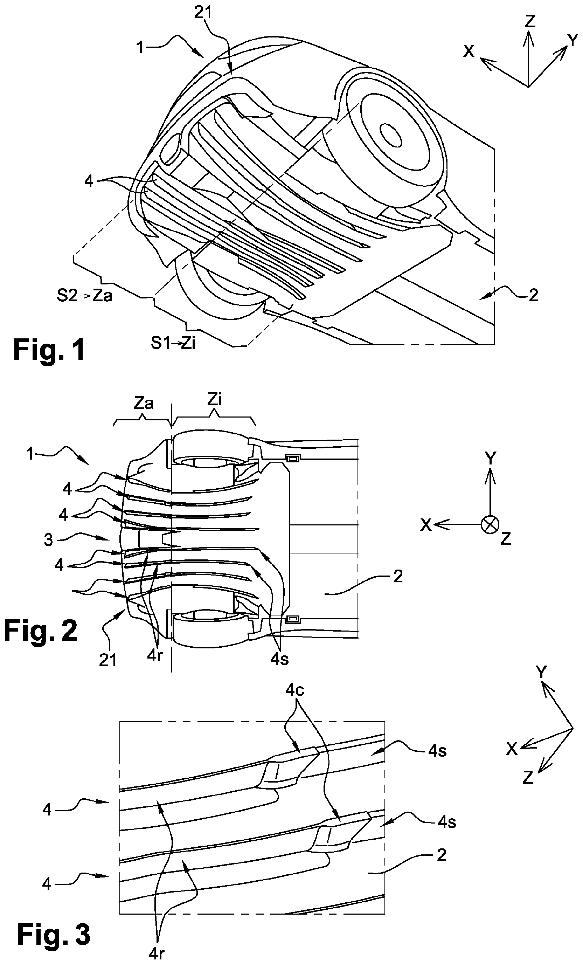

On a représenté aux figures 1 une vue partielle d'un véhicule automobile 1 ayant un soubassement 2 dont une partie arrière comporte un diffuseur aérodynamique 3 favorisant l'appui au sol du véhicule 1. Ce diffuseur comporte des dérives 4 formant des nervures sensiblement parallèles à la direction longitudinale X du véhicule pour le guidage de l'air au contact de la surface inférieure du soubassement 2 du véhicule.

Selon un aspect essentiel de l'invention, le diffuseur aérodynamique comprend une série S1, S2 de dérives 4 s'étendant essentiellement suivant la direction longitudinale X du véhicule, ces dérives 4 étant réalisées en matériau souple au moins pour une partie d'entre elles. Par « matériau souple » on entend de l'élastomère thermoplastique (TPE) ou tout matériau équivalent. Un tel matériau souple autorise une flexion ou déformation locale des dérives en cas de contact avec un sol irrégulier ou accidenté sous le véhicule (obstacle ou bosse sur le sol) sans engendrer une casse des dérives 4. La partie souple est de ce fait réalisée dans une matière souple dont la raideur a été dimensionnée entre la volonté de s'effacer face à un obstacle mais d'être suffisamment rigide afin de tenir face à la pression de l'air jusqu'à la vitesse maximale du véhicule.

De façon plus précise, dans un mode de réalisation illustré de l'invention, le diffuseur aérodynamique 3 comprend une première série S1 de dérives souples 4s situées dans une zone intermédiaire Zi du soubassement 2 du véhicule, et une seconde série S2 de dérives rigides 4r situées dans une zone arrière Za située à l'arrière de la zone intermédiaire Zi, et débouchant sur un bord arrière 21 du soubassement 2 du véhicule 1. La zone intermédiaire Zi et la zone arrière Za sont jointives suivant une ligne ou bande s'étendant suivant la direction transversale Y du véhicule, qui est située sensiblement à la limite arrière des roues arrière du véhicule.

Les dérives 4 sont ainsi constituées de deux parties, une partie contribuant fortement au style du véhicule et visible depuis l'arrière du véhicule, et une partie technique souple dans le soubassement, située plus en avant.

Les dérives souples 4s de la première série S1 sont prolongées longitudinalement par les dérives rigides 4r de la seconde série S2. Chaque dérive souple 4s a une extrémité arrière qui coopère en contact et continuité de matière avec une extrémité avant d'une dérive rigide 4r correspondante de la seconde série S2. Ainsi un léger décalage transversal ou longitudinal entre deux dérives 4s et 4r d'une même ligne longitudinale, est compensé par les conformations d'extrémités jointives entre les deux dérives. Comme on le voit à la figure 3, les dérives rigides 4r ont des conformations 4c constituées d'empreintes ou logements destinées à recevoir la forme correspondante des dérives souples 4s.

Dans le mode de réalisation décrit, huit lignes de dérives longitudinales 4 sont prévues et réparties transversalement suivant la direction transversale Y du véhicule, sur la largeur du soubassement 2. Chaque ligne de dérive 4 est constitué d'une partie avant souple et d'une partie arrière rigide.

Les dérives 4 présentent une forme rectiligne et/ou arquée présentant un côté convexe dirigé vers un plan vertical longitudinal médian du véhicule. Dans le mode de réalisation décrit, la forme des lignes de dérives se rapproche d'une forme rectiligne à mesure que l'on se rapproche d'un plan vertical longitudinal médian du véhicule, et présente une forme plus arquée à mesure que l'on s'éloigne transversalement de ce plan. La disposition des huit lignes est symétrique par rapport au plan précité, quatre lignes étant disposées de part et d'autre de ce plan. Dans une variante de réalisation non illustrée de l'invention, on peut prévoir moins de huit lignes ou plus de huit lignes de dérives selon le schéma d'implantation souhaité.

Selon un mode de réalisation de l'invention, les dérives 4s, 4r de la première série S1 et/ou de la seconde série S2 ont une section transversale ayant la forme générale d'un L dont l'une des branches et fixée au soubassement face contre face.

Les dérives sont fixées au soubassement par rivet avec une distance entre deux rivets consécutifs comprise entre 150 et 250 mm. Un écartement de l'ordre de 200 mm est adapté.

Les dérives 4s de la première série S1 et/ou les dérives 4r de la seconde série S2 ont une hauteur comprise entre 20 et 40 mm, notamment 30 mm. Cette hauteur est mesurée suivant la direction verticale Z du véhicule.

L'avant de la zone intermédiaire Zi qui correspond aux extrémités avant des dérives souples 4s de la première série S1 définit une ligne ou bande s'étendant suivant la direction transversale Y du véhicule et qui est située en avant de la limite avant des roues arrière du véhicule.

La longueur des dérives souples 4s est variable compte tenu du fait qu'elles sont plus courbées vers les côtés du véhicule et plus droites vers le centre du véhicule, comme indiqué plus haut. La longueur des dérives souples 4s est de ce fait comprise entre 700 et 800 mm, ces valeurs étant indiquées à titre d'exemple non limitatif.

On note également que la largeur des dérives souples 4s et/ou rigides 4r est de l'ordre de 5 mm.

La définition technique des dérives 4 de l'invention, repose sur de grandes dérives parcourant une zone peu utilisée du soubassement 2 en allant en amont des roues arrière. Les dérives ont une courbure déterminée pour maximiser le débit dans le diffuseur et servent également à protéger l'écoulement des effets du vent latéral afin d'optimiser son efficacité quel que soit les conditions extérieures. Elles permettent également d'augmenter l'interaction avec le sol défilant sous la voiture pour générer une aspiration du fond plat du véhicule contribuant à sa stabilité. Bien entendu, l'invention n'est pas limitée aux modes ou variantes de réalisation décrits précédemment et comprends tous les équivalents techniques de ces moyens.

## Revendications

1. Diffuseur aérodynamique (3) pour soubassement (2) d'un véhicule automobile, comprenant une série de dérives (4) s'étendant essentiellement suivant la direction longitudinale (X) du véhicule, au moins une partie des dérives (4) étant souple, **caractérisé en ce qu'**il comprend une première série (S1) de dérives souples (4s) situées dans une zone intermédiaire (Zi) du soubassement du véhicule, et une seconde série (S2) de dérives rigides (4r) situées dans une zone arrière (Za) située à l'arrière de la zone intermédiaire (Zi), et débouchant sur un bord arrière (21) du soubassement (2) du véhicule (1).

2. Diffuseur aérodynamique (3) selon la revendication 1, **caractérisé en ce que** les dérives (4s) de la première série (S1) sont prolongées longitudinalement par les dérives (4r) de la seconde série (S2), les dérives de l'une des première (S1) ou seconde série (S2) comportant une conformation adaptée pour coopérer par contact et continuité de matière avec une conformation complémentaire de l'autre des première (S1) ou seconde (S2) série.

3. Diffuseur aérodynamique (3) selon la revendication 1 ou 2, **caractérisé en ce que** chacune des première (S1) et seconde (S2) séries de dérives (4) comporte entre six et dix, notamment huit dérives (4), disposées symétriquement de part et d'autre d'un plan vertical longitudinal médian du véhicule, les dérives (4) présentant une forme rectiligne et/ou arquée présentant un côté convexe dirigé vers un plan vertical longitudinal médian du véhicule.

4. Diffuseur aérodynamique (3) selon l'une quelconque des revendications 1 à 3, **caractérisé en ce que** les dérives (4s, 4r) de la première série (S1) et/ou de la seconde série (S2) ont une section transversale ayant la forme générale d'un L dont l'une des branches est fixée au soubassement (2).

5. Diffuseur aérodynamique (3) selon la revendication 4, **caractérisé en ce que** les dérives de la première série (S1) et/ou de la seconde série (S2) sont fixées au soubassement par rivet avec une distance entre deux rivets consécutifs comprise entre 150 et 250 mm, par exemple 200 mm.

6. Diffuseur aérodynamique selon l'une quelconque des revendications 1 à 5, **caractérisé en ce que** les dérives (4s) de la première série (S1) sont en élastomère thermoplastique.

7. Diffuseur aérodynamique selon l'une quelconque des revendications 1 à 6, **caractérisé en ce que** les dérives (4s) de la première série (S1) ont une hauteur comprise entre 20 et 40 mm, notamment 30 mm.

8. Soubassement (2) d'un véhicule automobile, **caractérisé en ce qu'**il comprend un diffuseur aérodynamique (3) selon l'une quelconque des revendications précédentes, les dérives souples (4s) ayant une extrémité avant située en avant des roues arrière du véhicule (1).

9. Véhicule automobile **caractérisé en ce qu'**il comprend un soubassement (2) comprenant un diffuseur aérodynamique (3) selon l'une quelconque des revendications 1 à 7.

## Patentansprüche

1. Aerodynamischer Diffusor (3) für den Unterboden (2) eines Kraftfahrzeugs, welcher eine Reihe von Finnen (4) umfasst, die sich im Wesentlichen in der Längsrichtung (X) des Fahrzeugs erstrecken, wobei wenigstens ein Teil der Finnen (4) flexibel ist, **dadurch gekennzeichnet, dass** er eine erste Reihe (S1) von flexiblen Finnen (4s), die sich in einem Zwischenbereich (Zi) des Unterbodens des Fahrzeugs befinden, und eine zweite Reihe (S2) von starren Finnen (4r), die sich in einem hinter dem Zwischenbereich (Zi) befindlichen hinteren Bereich (Za) befinden und an einem hinteren Rand (21) des Unterbodens (2) des Fahrzeugs (1) münden, umfasst.

2. Aerodynamischer Diffusor (3) nach Anspruch 1,
**dadurch gekennzeichnet, dass** die Finnen (4s) der ersten Reihe (S1) in Längsrichtung durch die Finnen (4r) der zweiten Reihe (S2) verlängert sind, wobei die Finnen der einen von der ersten (S1) und der zweiten Reihe (S2) eine Formgebung aufweisen, die dafür eingerichtet ist, durch Kontakt und stoffschlüssige Verbindung mit einer komplementären Formgebung der anderen von der ersten (S1) und der zweiten Reihe (S2) zusammenzuwirken.

3. Aerodynamischer Diffusor (3) nach Anspruch 1 oder 2, **dadurch gekennzeichnet, dass** die erste (S1) und zweite (S2) Reihe von Finnen (4) jeweils zwischen sechs und zehn, insbesondere acht Finnen (4) aufweisen, die symmetrisch beiderseits einer vertikalen Längsmittelebene des Fahrzeugs angeordnet sind, wobei die Finnen (4) eine geradlinige und/oder gekrümmte Form, die eine zu einer vertikalen Längsmittelebene des Fahrzeugs hin gerichtete konvexe Seite aufweist, aufweisen.

4. Aerodynamischer Diffusor (3) nach einem der Ansprüche 1 bis 3, **dadurch gekennzeichnet, dass** die Finnen (4s, 4r) der ersten Reihe (S1) und/oder der zweiten Reihe (S2) einen Querschnitt von der allgemeinen Form eines "L" aufweisen, von dem einer der Schenkel am Unterboden (2) befestigt ist.

5. Aerodynamischer Diffusor (3) nach Anspruch 4,
**dadurch gekennzeichnet, dass** die Finnen der ersten Reihe (S1) und/oder der zweiten Reihe (S2) mit Nieten am Unterboden befestigt sind, mit einem Abstand zwischen zwei aufeinander folgenden Nieten zwischen 150 und 250 mm, zum Beispiel 200 mm.

6. Aerodynamischer Diffusor nach einem der Ansprüche 1 bis 5, **dadurch gekennzeichnet, dass** die Finnen (4s) der ersten Reihe (S1) aus thermoplastischem Elastomer bestehen.

7. Aerodynamischer Diffusor nach einem der Ansprüche 1 bis 6, **dadurch gekennzeichnet, dass** die Finnen (4s) der ersten Reihe (S1) eine Höhe zwischen 20 und 40 mm, insbesondere von 30 mm aufweisen.

8. Unterboden (2) eines Kraftfahrzeugs, **dadurch gekennzeichnet, dass** er einen aerodynamischen Diffusor (3) nach einem der vorhergehenden Ansprüche umfasst, wobei die flexiblen Finnen (4s) ein vorderes Ende aufweisen, das sich vor den Hinterrädern des Fahrzeugs (1) befindet.

9. Kraftfahrzeug, **dadurch gekennzeichnet, dass** es einen Unterboden (2) umfasst, der einen aerodynamischen Diffusor (3) nach einem der Ansprüche 1 bis 7 umfasst.

## Claims

1. Aerodynamic diffuser (3) for an underbody (2) of a motor vehicle, comprising a series of strakes (4) extending substantially in the longitudinal direction (X) of the vehicle, at least a portion of the strakes (4) being flexible, **characterized in that** it comprises a first series (S1) of flexible strakes (4s) situated in an intermediate zone (Zi) of the underbody of the vehicle, and a second series (S2) of rigid strakes (4r) situated in a rear zone (Za) situated behind the intermediate zone (Zi), and opening onto a rear edge (21) of the underbody (2) of the vehicle (1).

2. Aerodynamic diffuser (3) according to Claim 1,
**characterized in that** the strakes (4s) of the first series (S1) are extended longitudinally by the strakes (4r) of the second series (S2), the strakes of one of the first (S1) or second series (S2) having a shaped element appropriate for cooperating by contact and continuity of material with a complementary shaped element of the other of the first (S1) or second (S2) series.

3. Aerodynamic diffuser (3) according to Claim 1 or 2,
**characterized in that** each of the first (S1) and second (S2) series of strakes (4) has between six and ten, in particular eight, strakes (4), disposed symmetrically on either side of a longitudinal vertical median plane of the vehicle, the strakes (4) having a shape that is rectilinear and/or arcuate with a convex side directed towards a longitudinal vertical median plane of the vehicle.

4. Aerodynamic diffuser (3) according to any one of Claims 1 to 3, **characterized in that** the strakes (4s, 4r) of the first series (S1) and/or of the second series (S2) have a transverse section that has the overall shape of an L of which one of the legs is fastened to the underbody (2).

5. Aerodynamic diffuser (3) according to Claim 4,
**characterized in that** the strakes of the first series (S1) and/or of the second series (S2) are fastened to the underbody by rivets, with a distance between two consecutive rivets of between 150 and 250 mm, for example 200 mm.

6. Aerodynamic diffuser according to any one of Claims 1 to 5, **characterized in that** the strakes (4s) of the first series (S1) are made of thermoplastic elastomer.

7. Aerodynamic diffuser according to any one of Claims 1 to 6, **characterized in that** the strakes (4s) of the first series (S1) have a height of between 20 and 40 mm, in particular 30 mm.

8. Underbody (2) of a motor vehicle, **characterized in that** it comprises an aerodynamic diffuser (3) according to any one of the preceding claims, the flexible strakes (4s) having a front end situated in front of the rear wheels of the vehicle (1).

9. Motor vehicle **characterized in that** it comprises an underbody (2) comprising an aerodynamic diffuser (3) according to any one of Claims 1 to 7.
